# EUROPEAN PATENT APPLICATION

(11) **EP 3 563 987 A1**
(43) Date of publication of application: **06.11.2019**
(21) Application number: 18170486.7
(22) Date of filing: 03.05.2018
(51) Int. Cl.: B25J 11/00, E02B 17/00, G01N 21/95

(54) **INSPECTION SYSTEM FOR REMOTE INSPECTION OF AN OFFSHORE FACILITY**

(71) Applicant: ABB Schweiz AG, 5400 Baden (CH)
(72) Inventor: GUNNAR, Johan, 5918 Frekhaug (NO)
(74) Representative: Kransell & Wennborg KB

(57) **Abstract**

It is provided an inspection system (1) for remote inspection of an offshore facility (2). The inspection system comprises: a carrying line (20) configured to be arranged between at least two horizontally separated support points (3a. 3b) on the offshore facility; an inspection unit (11) configured to move along the carrying line, wherein the inspection unit comprises; a camera (12); a processor (13); a communication module (14) enabling remote control of the inspection unit; wherein the inspection unit is constructed for operation in an explosive atmosphere.

## Description

### TECHNICAL FIELD

The invention relates to an inspection system for remote inspection of an offshore facility.

### BACKGROUND

Remote inspection of offshore facilities, such as oil and gas facilities, has been a topic for research with increased interest lately. Systems have been developed with the aim to replace field operators in harsh or hazardous areas by a robotic system that can perform inspection tasks. The systems normally include visual inspection, thermal inspection, detect changes by use of cameras or laser mapping, gas sensing and other sensing capabilities.

These systems are used for inspection of offshore facilities to detect any issues which may require action.

The article Galassi et al.: "Doris - a mobile robot for inspection and monitoring of offshore facilities", Anais do XX Congresso Brasileiro de Automática Belo Horizonte, MG, 20 a 24 de Setembro de 2014, available at http://www.swge.inf.br/cba2014/anais/PDF/1569995543.pdf at the time of filing this patent application, presents a research project which endeavours to design and implement a mobile robot for remote supervision, diagnosis, and data acquisition on offshore facilities. The proposed system is composed of a rail-guided robot capable of carrying cameras and various sensors through the inspected area.

### SUMMARY

While the mobile robot of the prior art is of great value, it requires a significant effort in time and expense to install the rails for such a robot. Moreover, if the inspection needs to be adjusted in its covered area, new rails need to be installed or the old rails need to be moved.

It is an object to provide an inspection system for offshore facilities which is more cost effective and flexible than what is known in the prior art.

According to a first aspect, it is provided an inspection system for remote inspection of an offshore facility. The inspection system comprises: a carrying line configured to be arranged between at least two horizontally separated support points on the offshore facility; an inspection unit configured to move along the carrying line, wherein the inspection unit comprises; a camera; a processor; a communication module enabling remote control of the inspection unit; wherein the inspection unit (11) is constructed for operation in an explosive atmosphere.

The communication module may support cellular network communication.

The communication module may support communication according to any of the IEEE 802.11x communication protocols.

The inspection unit may further comprise a lens cap, and a memory storing instructions that, when executed by the processor, cause the inspection unit to close the lens cap when the inspection system is inactive.

The inspection unit may further comprise a vertical movement unit on which the camera is mounted, whereby the camera is vertically movable in relation to the carrying line.

The inspection system may further comprise a protection booth for protecting the inspection unit when placed in the protection booth.

The inspection unit may be certified according to the ATEX, Appareils destines a etre utilises en ATmospheres EXplosibles, directive.

The camera may be an infrared camera.

The inspection unit may further comprise a microphone.

The inspection system may be arranged to obtain the position of the inspection unit 11.

The offshore facility may be an oil and/or gas facility.

The inspection unit may be configured to be controlled by an operator at a remote facility on land.

The inspection unit may comprise a motor for moving the inspection unit.

The inspection system may further comprise a motor at an end of the carrying line for moving the inspection unit.

The inspection system may further comprise a washing facility.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating an environment in which embodiments presented herein can be applied;
Fig 2 is a schematic diagram illustrating an embodiment of the inspection system of Fig 1 according to one embodiment;
Fig 3 is a schematic diagram illustrating an embodiment of the inspection unit of Fig 2 according to one embodiment; and
Fig 4 is a schematic diagram illustrating an embodiment of the inspection unit of Fig 3 according to one embodiment where the inspection unit comprises a vertical movement unit.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

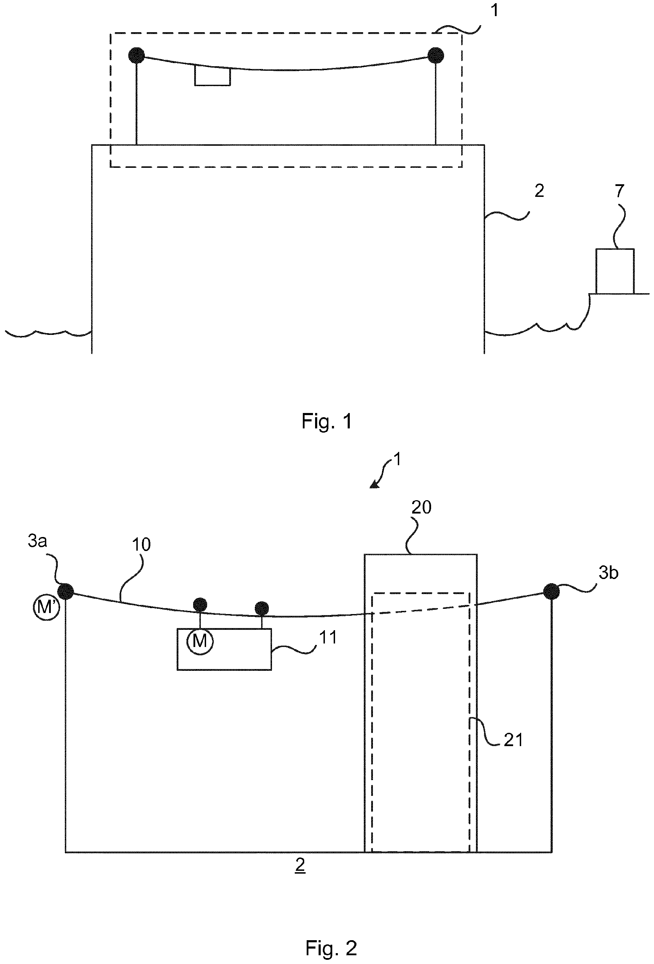

Fig 1 is a schematic diagram illustrating an environment in which embodiments presented herein can be applied. An offshore facility 2 is provided at sea, e.g. a well head platform, a drill rig, a riser platform, a production platform, etc. The environment of the offshore facility 2 is challenging for many reasons, e.g. extreme weather conditions, risk of leaking gas/oil, explosions, etc.

In order to monitor the offshore facility 2, an inspection system 1 is provided. The inspection system 1 can be used for a number of different tasks. For instance, routine inspection can be performed to patrol the offshore facility 2 to inspect and detect any issues. The inspection system 1 can be used in a first responder situation, where the inspection system 1 is used to get more information about an indicated issue or in an emergency situation at the offshore facility 2. Inspection can optionally be controlled by an operator at a remote facility 7 (which can be on land). The operator can then use the remote control to program the inspection system 1 to perform the routine inspection according to a schedule. Alternatively or additionally, the operator can use the remote control to command inspection at a specific location on the offshore facility 2. Alternatively, or additionally, the inspection system can perform tasks such as inspection rounds [autonomously]_{[JG1]}.

Fig 2 is a schematic diagram illustrating an embodiment of the inspection system 1 of Fig 1 according to one embodiment. The inspection system 1 comprises a carrying line 10 configured to be arranged between at least two horizontally separated support points 3a, 3b on the offshore facility 2. The carrying line can be a metal cable or of any other suitable material.

An inspection unit 11 is configured to move along the carrying line 10, to any desired point between the two support points 3a, 3b. As explained in more detail below, the inspection unit comprises a camera and optionally any suitable sensors for inspecting conditions at the offshore facility. Movement of the inspection unit 11 is achieved using at least one electric motor M, M'.

In one embodiment, the at least one motor M can be provided in the inspection unit 11, in which case the inspection unit 11 is self propelled. The inspection unit then also comprises a power supply, e.g. in the form of batteries. In this embodiment, a docking station can be provided at one or both ends of the carrying line to recharge the power supply of the inspection unit. By placing the motor M in the inspection unit, a simple and inexpensive system is provided that is also simple to install. Such a system can relatively easily be retrofit in an existing offshore facility.

Alternatively, the motor M' is provided at the end of the carrying line, e.g. by one or both support points 3a, 3b. In this case, the inspection unit 11 is fixed to the carrying line 10. The motor M' then cause the carrying line 10 to move, which also moves the inspection unit 11 since it is fixed to the carrying line 10. Since inspection unit 11 in this case does not need to have the motor, the power requirements for the inspection unit 11 are greatly reduced. This reduces weight and complexity for the inspection unit, which may make it easier to be certified as explosion proof (see definition below).

Optionally, a protection booth 20 is provided for protecting the inspection unit 11. The protection booth 20 then comprises walls and a roof to protect the inspection unit 11 from the environment when located in the protection booth 20. For instance, salt water and other deposits can cloud the lens of the camera. Such problems are prevented by placing the inspection unit 11 in the protection booth 20 when the inspection unit 11 is inactive.

Optionally, the protection booth 20 comprises a washing facility 21, whereby the inspection unit 11 can be washed when located in the protection booth 20. By washing the inspection unit 11, any deposits from saltwater or other environmental liquids or solids, which may reduce effectiveness of cameras or other sensors, are removed from the inspection unit 11.

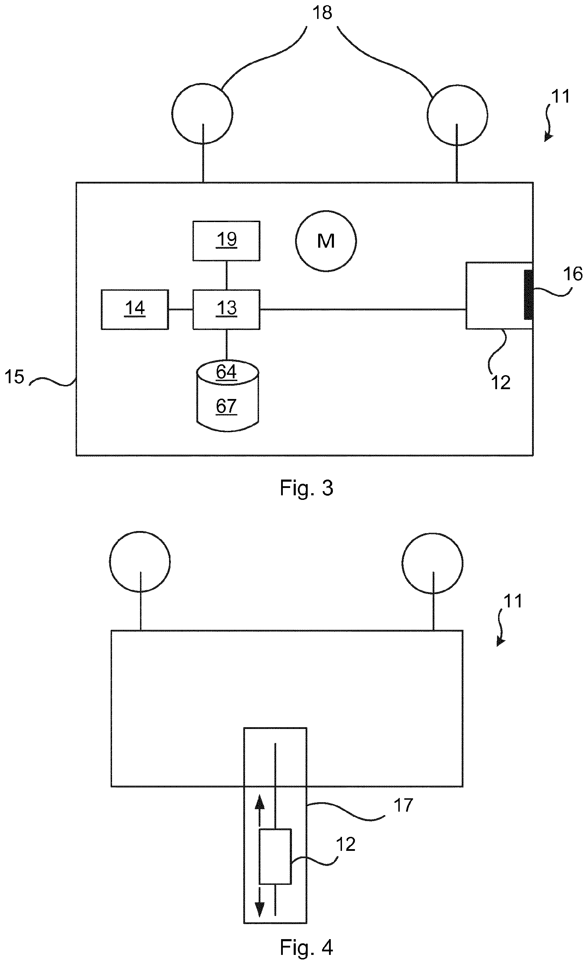

Fig 3 is a schematic diagram illustrating an embodiment of the inspection unit 11 of Fig 2 according to one embodiment. A processor 13 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 13 could alternatively be implemented using an application specific integrated circuit (ASIC), field programmable gate array (FPGA), etc.

The memory 64 can be any combination of random access memory (RAM) and/or read only memory (ROM). The memory 64 can be used for storing data and/or software instructions. The memory 64 comprises persistent storage, which, for example, can be any single one or combination of magnetic memory, optical memory, or solid-state memory.

The inspection unit 11 further comprises a communication module 14 enabling remote control of the inspection unit. In one embodiment, the communication module 14 supports cellular network communication. The cellular network can be of any suitable type, e.g. 5G NR (New Radio), LTE (Long Term Evolution), LTE-Advanced, W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future cellular network.

Alternatively or additionally, the communication module 14 supports communication according to any of the IEEE 802.11x communication protocols, i.e. WiFi, which is simple to deploy at an offshore facility and does not need base stations which might not reach an offshore facility provided far out at sea. An access point of the WiFi network on the offshore facility can be connected to a wired communication link to shore for remote control (see 7 of Fig 1).

The inspection unit also comprises a camera 12 which is used to capture images around the offshore facility. The camera 12 can be a pan, tilt and zoom (PTZ) camera, allowing an operator to appropriately control the camera to both get an overview and to focus on any particular part of the offshore facility when inspection occurs. Optionally, the camera 12 is an infrared camera, which simplifies detection and localisation of heat sources, such as fires.

Optionally, a lens cap 16 is provided. The lens cap is controllable by the processor 13, in which case the memory 64 stores instructions 67 that, when executed by the processor 13, cause the inspection system to close the lens cap 16 when the inspection system is inactive. Inactive can be defined as when the inspection unit is not moving for a period longer than a threshold time and/or when the camera is not used for capturing images.

The inspection unit 11 optionally comprises suitable sensors 19, e.g. a gas detector, a microphone for audio data collection and/or other sensors. Ability to equip inspection unit with a microphone provides a remote operator with additional awareness and possibility to detect abnormal [situations]_{[JG2]}. Optionally, a motor M is also included in the inspection unit 11.

[The]_{[JG3]} inspection unit 11 is explosion proof. In one embodiment, this is achieved by enclosing the inspection unit with an explosion proof housing 15. Alternatively, the inspection unit as such is constructed for use in an explosive environment, i.e. an intrinsically explosion proof implementation. Being explosion proof, the inspection unit 11 can be certified according to any suitable specification, such as Ex-i (for an intrinsically explosion proof implementation) according to IEC 60079-11, Ex-d (for an implementation using explosion proof housing) according to IEC EN 60079-1 and/or according to the ATEX (Appareils destines a etre utilises en ATmospheres EXplosibles) directive. For instance, the inspection unit 11 can be certified for one or more of the zones specified in the ATEX directive. Those zones, for gases, are:
Zone 0 - A place in which an explosive atmosphere consisting of a mixture of air with dangerous substances in the form of gas, vapour or mist is present continuously or for long periods or frequently.
Zone 1 - A place in which an explosive atmosphere consisting of a mixture of air with dangerous substances in the form of gas, vapour or mist is likely to occur in normal operation occasionally.
Zone 2 - A place in which an explosive atmosphere consisting of a mixture of air with dangerous substances in the form of gas, vapour or mist is not likely to occur in normal operation but, if it does occur, will persist for a short period only.

In one embodiment, the inspection unit 11 is certified for ATEX zone 1, which is applicable for oil and gas extraction on offshore facilities.

The inspection unit 11 comprise a carrying line interface 18 which, when in use, connects the inspection unit 11 with the carrying line (see 10 of Fig 2).

When the inspection unit 11 comprises its own motor M, the carrying line interface 18 comprises wheels which are drivable by the motor M. In this way, the inspection unit 11, when placed on the line carrying line 10, allows the inspection unit 11 to move along the line.

When the motor(s) are provided external to the inspection unit, the carrying line interface 18 can be a fixed attachment of the inspection unit 11 to the carrying line.

Optionally, the inspection unit 11 can be controlled to rotate horizontally, allowing the camera (and sensors) to be directed in any suitable horizontal direction.

In order to perform structured and repeated inspections, the position of the inspection unit 11 can be obtained. In this way, the inspection unit 11 can be sent to a specified position either ad hoc, or according to an inspection program which is repeatedly performed. The position detection can e.g. be based on revolution counters on motor, shaft or drive wheel. Alternatively the position could be detected from the cable used to pull the inspection unit 11 (when the motor is by a support point), or a special dedicated cable, that is provided with a pattern or cogs that are used to generate pulses that can be counted to calculate position.

The sensor readings from cameras and/or other sensors of the inspection unit 11 can be used for abnormality detection using data analytics, change detection algorithms, machine learning and/or artificial [intelligence]_{[JG4]}. In this way, the inspection system can automatically detect changes or situations and alert the operator or other connected systems.

The sensor readings from cameras and/or other sensors of the inspection unit 11 can be integrated into a 3D representation of the offshore facility. This allows an operator to understand how the video captured and sensor measurements by the inspection unit relate to the offshore facility and/or extraction process.

The inspection unit 11 does not have any robotic arm to remedy problematic situations; the inspection unit is used for gathering information and not for repair. By omitting any robotic arms, cost and complexity is significantly reduced.

Fig 4 is a schematic diagram illustrating an embodiment of the inspection unit of Fig 3 according to one embodiment where the inspection unit comprises a vertical movement unit 17. Only differences compared to the embodiment of Fig 3 is mentioned here in order to keep focus on the particular features of the embodiment of Fig 4.

The inspection unit 11 here comprises a vertical movement unit 17 on which the camera 12 is mounted. In this way, the camera 12 is vertically movable in relation to the carrying line (10 of Fig 2). In this way, the camera has greater flexibility of movement, allowing the camera 12 to capture images in viewpoints which may otherwise be difficult to capture.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An inspection system (1) for remote inspection of an offshore facility (2), the inspection system (1) comprising:
a carrying line (10) configured to be arranged between at least two horizontally separated support points (3a, 3b) on the offshore facility (2);
an inspection unit (11) configured to move along the carrying line (10), wherein the inspection unit (11) comprises;
a camera (12);
a processor (13);
a communication module (14) enabling remote control of the inspection unit;
wherein the inspection unit (11) is constructed for operation in an explosive atmosphere[.]_{[JG5]}

2. The inspection system (1) according to claim 1, wherein the communication module (14) supports cellular network communication.

3. The inspection system (1) according to claim 1 or 2, wherein the communication module (14) supports communication according to any of the IEEE 802.11x communication protocols.

4. The inspection system (1) according to any one of the preceding claims, wherein the inspection unit (11) further comprises a lens cap (16), and a memory (64) storing instructions (67) that, when executed by the processor (13), cause the inspection unit (11) to close the lens cap (16) when the inspection system (1) is inactive.

5. The inspection system (1) according to any one of the preceding claims, wherein the inspection unit (11) further comprises a vertical movement unit (17) on which the camera (12) is mounted, whereby the camera (12) is vertically movable in relation to the carrying line (10).

6. The inspection system (1) according to any one of the preceding claims, further comprising a protection booth (20) for protecting the inspection unit (11) when placed in the protection booth (20).

7. The inspection system (1) according to any one of the preceding claims, wherein the inspection unit is certified according to the ATEX, Appareils destines a etre utilises en ATmospheres EXplosibles, directive.

8. The inspection system (1) according to any one of the preceding claims, wherein the camera is an infrared camera.

9. The inspection system (1) according to any one of the preceding claims, wherein the inspection unit (11) further comprises a microphone (19).

10. The inspection system (1) according to any one of the preceding claims, wherein the inspection system is arranged to obtain the position of the inspection unit (11).

11. The inspection system (1) according to any one of the preceding claims, wherein the offshore facility is an oil and/or gas facility.

12. The inspection system (1) according to any one of the preceding claims, wherein the inspection unit is configured to be controlled by an operator at a remote facility (7) on land.

13. The inspection system (1) according to any one of the preceding claims, wherein the inspection unit (11) comprises a motor for moving the inspection unit (11).

14. The inspection system (1) according to any one of the preceding claims, further comprising a motor at an end of the carrying line (10) for moving the inspection unit (11).

15. The inspection system (1) according to any one of the preceding claims, further comprising a washing facility (21).
